Europäisches Patentamt

**European Patent Office**

Office européen des brevets

(19)

(11) Veröffentlichungsnummer: **0 265 817 B1**

(12) **EUROPÄISCHE PATENTSCHRIFT**

(45) Veröffentlichungstag der Patentschrift: **18.12.91**

(51) Int. Cl.5: **H04M 3/36**

(21) Anmeldenummer: **87115358.1**

(22) Anmeldetag: **20.10.87**

(54) **Verfahren zur Belastungsregelung für Fernmeldevermittlungsanlagen, insbesondere Fernsprechvermittlungsanlagen, mit Informationen verarbeitendem Schaltwerk und Verarbeitungs-Belastungsbegrenzung.**

(30) Priorität: **30.10.86 DE 3636992**

(43) Veröffentlichungstag der Anmeldung:
**04.05.88 Patentblatt 88/18**

(45) Bekanntmachung des Hinweises auf die Patenterteilung:
**18.12.91 Patentblatt 91/51**

(84) Benannte Vertragsstaaten:
**AT BE CH DE ES FR GB GR IT LI NL SE**

(56) Entgegenhaltungen:
**EP-A- 0 176 764**
**EP-A- 0 205 919**
**FR-A- 2 402 904**
**GB-A- 2 001 227**

**PROCEEDINGS OF THE ELEVENTH INTERNA-TIONAL TELETRAFFIC CONGRESS, 4.-11. September 1985, Seiten 120-126, Kyoto, JP; G. DAISENBERGER et al.: "Stator-statistical overload regulation- and tail-time account input limitation - Two concepts for overload regulation in SPC systems"**

**PROCEEDINGS OF THE ELEVENTH INTERNA-**

**TIONAL TELETRAFFIC CONGRESS, 4.-11. September 1985, Seiten 760-766, Kyoto, JP; Y. LEVY: "A class of scheduling policies for real-time processors with switching system applications"**

**PROCEEDINGS OF THE TENTH INTERNATIO-NAL TELETRAFFIC CONGRESS, 9.-15. Juni 1983, "Session" 1.3, "Paper" 2, Seiten 1-7, Montreal, CA; M. EISENBERG: "A strict priori-ty queuing system with overload control"**

(73) Patentinhaber: **SIEMENS AKTIENGESELL-SCHAFT**
**Wittelsbacherplatz 2**
**W-8000 München 2(DE)**

(72) Erfinder: **Hanselka, Peter, Dipl.-Math.**
**Von-Kleist-Strasse 23**
**W-8905 Mering(DE)**
Erfinder: **Oehlerich, Jörg, Dipl.-Ing.**
**Grabmuehlerfeldstrasse 30**
**W-8035 Gauting(DE)**

EP 0 265 817 B1

## Beschreibung

Die Erfindung betrifft ein Verfahren zur Belastungsregelung gemäß dem Oberbegriff des Patentanspruchs 1.

Schaltungsanordnungen zur Durchführung von Verfahren dieser Art sind bereits durch die deutschen Offenlegungsschriften 33 28 571 und 34 35 720 & EP-A-0 176 764 bekannt. Für Schaltwerke der bekannten Art, zum Beispiel einen zentralen Prozessor in einer Fernsprechvermittlungsanlage, bestehen unter anderem zwei grundlegende Forderungen. Er soll einerseits möglichst gut ausgelastet sein, d. h. er soll von den insgesamt anfallenden Informationsverarbeitungsaufträgen so viele wie möglich - möglichst alle - zur Ausführung bringen. Er muß aber auch vor einer Überlastung geschützt werden, damit die in ihm ablaufenden Informationsverarbeitungsprozesse, die jeweils bereits von ihm begonnen wurden, zeitgerecht erfolgen können und ungestört abgewickelt werden (zum Beispiel muß auch eine Überfüllung einer sogenannten Eingabeliste vermieden werden); dafür muß gegebenenfalls die einem zentralen Prozessor zugeführte Belastung begrenzt werden, indem ein Teil der anstehenden Informationsverarbeitungsaufträge abgewiesen wird. Diese beiden Forderungen sind gegenläufig.

Die Auslastung eines zentralen Prozessors, also seine praktische Ausnutzung, soll so hoch wie möglich sein; dabei sollen jedoch Überlastungen mit möglichst hoher Sicherheit vermieden werden. Zur Erfüllung dieser Forderung dient zunächst die eingangs genannte Meßeinrichtung, die in der angegebenen Weise die relativ langfristigen Schwankungen der Belastbarkeit erfaßt, zum Beispiel die für die verschiedenen Tageszeiten jeweils typische Belastbarkeit. Diese das relativ langfristige Belastbarkeitsverhalten erfassende Belastbarkeitsmessung mittels dieser Meßeinrichtung wird unten noch genauer erläutert.

Die Erfüllung der oben genannten Forderungen wird durch die zufallsbedingt unsystematischen, immer wieder auftretenden steten Schwankungen der Belastung des zentralen Prozessors erschwert. Das Belastungsverhalten kann außer einer deutlich und stetigen, steigenden oder fallen den Tendenz, die regelungstechnisch noch relativ leicht beherrschbar ist, eine sprunghaft ansteigende Tendenz, eine sprunghaft nur für relativ kurze Zeit ansteigende Tendenz (Belastungsspitzen), eine schleichend ansteigende Tendenz und dergleichen aufweisen.

Um diese Vielfalt von Belastungsverhaltensweisen zu beherrschen, sehen die genannten bekannten Schaltungsanordnungen außer der genannten Meßeinrichtung unter anderem den eingangs bereits erwähnten Zähler vor, der von den bei dem ebenfalls erwähnten zentralen Prozessor eingehenden Informationsverarbeitungsaufträgen nur die Initialschaltkennzeichen in Zeitabschnitten erfaßt. Ein Initialschaltkennzeichen ist bekanntlich immer ein erstes von jeweils einer Reihe von Schaltkennzeichen, wobei eine solche Reihe eine Folge von zusammengehörenden Schaltkennzeichen umfaßt; dies können zum Beispiel jeweils sämtliche Schaltkennzeichen sein, die zu je einer Verbindungsherstellung gehören, also Belegungskennzeichen (auch als "Anrufsignal" bezeichnet), Wahlinformationen (Ziffern einer mehrstelligen Rufnummer), Wahlendekennzeichen, Meldekennzeichen, Gebührenzählinformationen, Endekennzeichen und dergleichen. Alle diese Schaltkennzeichen können dem betreffenden zentralen Prozessor übertragen werden und stellen für diesen Informationsverarbeitungsaufträge dar. Da sie pro Verbindung nacheinander und mit zum Teil größeren zeitlichen Abständen voneinander eintreffen, gelangen sie bezüglich vieler verschiedener solcher Reihen ineinander zeitlich unsystematisch verschachtelt zum zentralen Prozessor.- Ein Initialschaltkennzeichen ist also immer das erste von einer Reihe von zusammengehörenden Schaltkennzeichen. Dabei können die Schaltkennzeichen, die in Zusammenhang mit einer Verbindung insgesamt gebildet werden, eine solche Reihe von Informationsverarbeitungsaufträgen bilden. Eine Reihe von Informationsverarbeitungsaufträgen kann aber zum Beispiel auch auf sämtliche für eine Verbindungsherstellung abgegebenen Wählziffern beschränkt sein.

Da jedes Initialschaltkennzeichen immer den Anfang einer Reihe von jeweils erst in den nächsten Sekunden nacheinander eintreffenden Informationsverarbeitungsaufträgen (als erstes also ein Initialschaltkennzeichen, anschließend eine Anzahl von Nachfolgeschaltkennzeichen) darstellt, werden in den bekannten Schaltungsanordnungen von dem genannten Zähler die Initialschaltkennzeichen erfaßt, weil das Verhalten des Anfallens von Initialschaltkennzeichen immer das Verhalten der erst in den nächsten Sekunden auf den zentralen Prozessor zu kommenden Informationsverarbeitungs-Belastung gleichsam in einer Vorschau angibt. Hierauf kann mit entsprechenden Abweisungsmaßnahmen, die in den genannten Offenlegungsschriften bereits beschrieben sind, reagiert werden. Hierzu sind Abweiseinrichtungen vorgesehen, die gemäß einem mit Hilfe des Zählers gebildeten und jenen jeweils übertragenen Abweisungsprozentsatz einen Teil der eintreffenden Informationsverarbeitungsaufträge, insbesondere einen Teil der zu verarbeitenden Initialschaltkennzeichen einschließlich der jeweils zugehörigen Nachfolgeschaltkennzeichen, abweisen.

Zum Vergleich der in einem Schaltwerk der bekannten Art, zum Beispiel in einem zentralen Prozessor, in der beschriebenen Weise bereits in gewissem Maße sogar vorhersehbaren Tendenz der Belastungsentwicklung mit der momentanen Ist-Belastung dieses Schaltwerks gehört zu den Schaltungsanordnungen, die in den genannten Offenlegungsschriften beschrieben sind, die der Belastbarkeitsmessung dienende Meßeinrichtung, mit der ein Abweichen der Momentanbelastung von einem dem 100%-Wert nahekommenden Soll-Wert (zum Beispiel 95%) gemessen wird. Hierzu werden pro Meßperiode sämtliche Zeiten der in Anspruchnahme des zentralen Schaltwerks aufsummiert, und die sich ergebende Summe wird mit dem betreffenden Soll-Wert verglichen. Liegt eine Abweichung vor, so gibt die Belastungsmeßeinrichtung bei zu niedriger Belastung ein Steigerungssignal und bei zu hoher Belastung ein Minderungssignal an den genannten, den Zustrom von Informationsverarbeitungsaufträgen, insbesondere Initialschaltkennzeichen, erfassenden Zähler ab. In diesem Zähler ist ein Regelnormal gespeichert, also ein Vergleichswert, der durch das Steigerungssignal etwas erhöht wird bzw. durch das Minderungssignal etwas verkleinert wird. Dieser Vergleichswert gibt die Anzahl von Informationsverarbeitungsaufträgen pro Zeiteinheit, zum Beispiel pro Sekunde, an, die eine Belastung des Schaltwerks in der vorgesehenen Höhe von zum Beispiel 95% unter den jeweils augenblicklichen Belastbarkeitsvoraussetzungen, d.h. zum Beispiel unter den tageszeitlich bedingten Betriebsverhältnissen, zur Folge haben.

Durch die angegebene Erhöhung bzw. Herabsetzung des Vergleichswertes wird dem laufenden Vergleich der jeweiligen Anzahl von Informationsverarbeitungsaufträgen mit dem Vergleichswert folglich ein stets aktualisierter Vergleichswert zugrunde gelegt. Dessen Schwankungen, resultierend aus den Schwankungen der Belastbakeit des Prozessors, sind dadurch bedingt, daß sich die Zusammensetzung von Informationsverarbeitungsvorgängen verschiedener Art während des laufenden Betriebes eines zentralen Prozessors im Tageszyklus und/oder im Wochenzyklus und/oder auch im Jahreszyklus verschieben kann. So kann es zum Beispiel unter der Voraussetzung, daß das Schaltwerk, das der zentrale Prozessor einer Fernsprechvermittlungsanlage sein möge, sein, daß zu bestimmten Tageszeiten überwiegend Ortsverbindungen herzustellen sind, während zu bestimmten anderen Tageszeiten überwiegend Fernverbindungen herzustellen sind. Entsprechendes kann auch bezüglich verschiedener Wochentage (Werktage bzw. Sonn- und Feiertage) zu beobachten sein. Ferner kann es sein, daß zu bestimmten Tageszeiten oder an bestimmten Tagen mehr Kurzzeitgespräche stattfinden und zu anderen Tageszeiten bzw. an anderen Tagen mehr Langzeitgespräche. Ferner kann es sein, daß zu bestimmten Tageszeiten mehr Sonderdienste in Anspruch genommen werden, als zu anderen Tageszeiten. Auch kann es sein, daß zu bestimmten Tageszeiten der Anteil von vorzeitig abgebrochenen Verbindungsherstellungsvorgängen größer ist als zu bestimmten anderen Tageszeiten. Entsprechendes gilt immer auch bezüglich verschiedener Tage (Werktage bzw. Sonn- und Feiertage). Unterschiede können sich auch ergeben, wenn das Netz bei Nennlast, Hochlast oder gar bei Überlast betrieben wird, wodurch sich insbesondere die Anzahl der unvollständigen Verbindungen erhöht. Folglich ist die Belastbarkeit (Anzahl der verarbeitbaren Folgen von Informationsverarbeitungsaufträgen) eines Schaltwerks der angegebenen bekannten Art nicht konstant.

Die einem Schaltwerk der bekannten Art zugeführten Verarbeitungsaufträge sind nicht nur vermittlungstechnische Informations-Verarbeitungsaufträge für gewählte individuelle Verbindungen, sondern auch betriebstechnische Daten-Verarbeitungsaufträge für Funktionsprüfvorgänge und/oder für einen dem Aufbau einer Vermittlungsanlage entsprechenden, dem Vermittlungsbetrieb dienenden und hierfür zu speichernden Datenbestand. Schaltwerke der bekannten Art erhalten also Verarbeitungsaufträge beiderlei Art und haben sie zu verarbeiten.

In den durch die genannten beiden Offenlegungsschriften bekannten Schaltungsanordnungen erfolgt die Abweisung von Informations-Verarbeitungsaufträgen in Abweiseinrichtungen in dezentralen Steuereinrichtungen. Diese Abweisung ist in den bekannten Fällen folglich auf vermittlungstechnische Informations-Verarbeitungsaufträge für gewählte individuelle Verbindungen beschränkt.

Da die beschriebene Regelung einschließlich einer gegebenenfalls notwendig werdenden Drosselung (durch Abweisung) auf einen Belastungswert für das zentrale Schaltwerk hinwirkt, der etwas niedriger als 100% ist, zum Beispiel 95%, kann es nun in den bekannten Fällen vorkommen, daß die erwähnten Daten-Verarbeitungsaufträge (für Funktionsprüfvorgänge und/oder für einen dem Aufbau einer Vermittlungsanlage entsprechenden, dem Vermittlungsbetrieb dienenden und hierfür zu speichernden Datenbestand) nach und nach die vermittlungstechnischen Informations-Verarbeitungsaufträge für gewählte individuelle Verbindungen verdrängen. Denn es kann vorkommen, daß bei einem stärkeren Andrang von Daten-Verarbeitungsaufträgen diese die Schaltwerks-Ist-Belastung gegenüber der Schaltwerks-Soll-Belastung ständig etwas erhöhen, wodurch der eingangs genannte stets wiederholte Soll-Ist-Vergleich ständig auf eine Verminderung des Belastbarkeitswertes hinwirkt mit dem Ziel, die Schaltwerks-Ist-Belastung auf den gewünschten Wert von zum Beispiel 95% zu bringen. Dabei kann sich ergeben, daß der Anteil der Daten-Verarbeitungsaufträge langsam aber stetig anwächst und die vermittlungstechnischen Informations-Verarbeitungsaufträge nach und nach verdrängt.

Für die Erfindung besteht die Aufgabe, für eine Schaltungsanordnung der eingangs angegebenen Art geeignete Maßnahmen anzugeben, durch die der beschriebene Verdrängungs-Effekt beseitigt wird. Dabei soll sichergestellt werden, daß der der Abwicklung der vermittlungstechnischen Informations-Verarbeitungsaufträge dienende Anteil der Arbeitskapazität des Schaltwerks nicht durch die Daten-Verarbeitungsaufträge beliebig herabgemindert werden kann, die ja nicht den durch den Zähler bewirkten Abweisungsmaßnahmen unterworfen sind.

Gelöst wird diese Aufgabe erfindungsgemäß durch die im Anspruch 1 angegebenen Merkmale.

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden rechnergesteuerten Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld weist eingangsseitig eine große Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, zum Beispiel A des Koppelfeldteiles K, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig mit Teilnehmerleitungen (analog und/oder digital), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/1980, Heft 10, Seiten 646 bis 652, und 1978 International Zurich Seminar on Digital Communications, Proceedings IEE Catalogue, Nr. 78 CH 1325-0 ASST, Seiten B2-1, A4.1, auch die deutschen Offenlegungs- bzw. Patentschriften DE-A1-31 00 911; DE-A1-31 04 002 und DE-C2-31 06 903.

In der Zeichnung ist unter anderem die Anschlußgruppe LTG1 gezeigt. Deren Aufbau und Arbeitsweise sind ausführlich in der DE-A 28 26 113 ab Seite 6 unten beschrieben. Ferner ist auf das Beiheft zum 4. Jahrgang (1981) der Zeitschrift "telcom report" und auf das USA-Patent 4 564 725 hinzuweisen. Die weiteren Erläuterungen setzen diese Beschreibung als bekannt voraus und beschränken sich auf die im vorliegenden Falle besonders wesentlichen Zusammenhänge.

Ein zentrales Steuerwerk CP dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegsucheinrichtung nebst Belegungsspeicher ausübt, erarbeitet und zur Koppelfeldeinstelleinrichtung KE des Koppelfeldes übertragen. Der die Vermittlungsdaten übertragende Datenfluß vom Zentralsteuerwerk CP zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist zum Beispiel in der DE-A-15 37 849 ausführlich beschrieben.

Außer dem zentralen Steuerwerk CP ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-C-28 26 113 entnommen werden.

Die dezentralen Steuereinrichtungen GP bis GPn stehen mit dem zentralen Steuerwerk CP über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, zum Beispiel der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen, die als semipermanente Verbindungen bezeichnet werden, über das Koppelfeld erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelfeldstufe vorzusehen.

Da die weiter oben beschriebenen Datenverbindungen zwischen der Puffereinrichtung MB über die Zeitmultiplexleitung m zu jeder der Anschlußgruppen LTG1 bis LTGn mit Hilfe des Koppelfeldes K durchgeschaltet sein müssen, bevor der Aufbau von Nachrichtenverbindungen, zum Beispiel Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V1 Einstelldaten, d.h. also die Vermittlungsdaten, für die Datenkanäle gespeichert enthält. Diese Vermittlungsdaten brauchen also bei einem Neuaufbau der Datenverbindung nicht jeweils vom zentralen Steuerwerk CP neu erarbeitet zu werden und nicht über die Puffereinrichtung MB erneut übertragen zu werden. Sind die zwischen der Puffereinrichtung MB und den Anschlußgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk CP lediglich einen entsprechenden Befehl an die Puffereinrichtung MB ab, den sie an die Koppelfeldeinstelleinrichtung KE weitergibt, und aufgrund deren diese die in ihrem Speicher V1 gespeicherten Vermittlungsdaten entnimmt, um in an sich bekannter Weise die erforderlichen Vermittlungsvorgänge einzeln nacheinander auszuführen.

Wie in der bereits genannten DE-A-28 26 113 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, zum Beispiel LTG1, zugeordneten dezentralen Steuereinrichtungen, zum Beispiel GP, einerseits und dem zentralen Steuerwerk CP andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk CP. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten deutschen Offenlegungsschrift 28 26 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze und dergleichen sind teilnehmerindividuelle und/oder verbindungsindividuelle Schalteinrichtungen. Das Gruppensteuerwerk nun dient in an sich bekannter Weise zur Abwicklung der Aufnahme der zuvor erwähnten eintreffenden verbindungsindividuellen Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speicher SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld K hin als auch von diesem abgehend zu einer solchen Leitung durchgeschaltet. Bei einer Verbindungsherstellung erfolgt zunächst eine Durchschaltung zum Beispiel von einer Teilnehmerleitung über die betreffende Anschlußgruppe zum zentralen Koppelfeld K. Die für die weitere Durchschaltung der betreffenden Verbindung über dieses Koppelfelderforderlichen Daten werden vom Gruppensteuerwerk über die betreffende, bereits erwähnte Datenverbindung zum Zentralsteuerwerk CP übertragen. Zur Vollständigkeit sei auch erwähnt, daß es ebenfalls Daten gibt, die von Gruppensteuerwerk zu Gruppensteuerwerk nicht über das Zentralsteuerwerk, sondern auf anderem Wege übertragen werden (vgl. DE-A-31 28 365). Die weitere Verbindungsdurchschaltung erfolgt über eine Anschlußgruppe (gegebenenfalls dieselbe Anschlußgruppe, in der Regel aber eine andere Anschlußgruppe), wozu das betreffende Gruppensteuerwerk der jeweiligen Anschlußgruppe tätig werden muß, bzw. die betreffenden Gruppensteuerwerke der jeweiligen Anschlußgruppen tätig werden müssen.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits.

Die im Zusammenhang dieser jeweils pro Verbindung erforderlichen Durchschaltvorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Inanspruchnahme des Gruppensteuerwerks zwangsläufig verbundene Informationsverarbeitungs-Verkehrsbelastung pro Durchschaltevorgang - wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeeichen ist bei einer Teilnehmerleitung mit Schleifenimpulsgabe zum Beispiel der Schleifenschluß, der das Anrufsignal darstellt. Ein solches Initial-Schaltkennzeichen ist bei einer Verbindungsleitung zum Beispiel das c-Ader-Belegungssignal bei ankommender Belegung. Entsprechendes gilt für verbindungsindividuelle Kanäle.

Die genannten Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung repräsentieren sie jeweils ein entsrechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen.

Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk CP. Je nach dem, ob es sich bei einer über das Koppelfeld K durchzuführenden Durchschaltung um eine Internverbindung, eine ankommende oder abgehende Ortsverbindung oder eine ankommende oder abgehende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Das bereits erwähnte Zentralsteuerwerk CP ist ein zentrales informationsverarbeitendes Schaltwerk. Die dezentralen Steuereinrichtungen GP1 bis GPn sind teilzentrale informationsverarbeitende Schaltwerke. Wie bereits erläutert wurde, findet der Datenaustausch zwischen den teilzentralen Schaltwerken GP1 bis GPn einerseits und dem zentralen Schaltwerk CP andererseits über die Pufferspeicher MB statt. Informationen, die zum zentralen Schaltwerk hin zu übertragen sind, werden über die Leitungen za, ze und h weitergegeben. Informationen, die vom zentralen Schaltwerk CP zu den teilzentralen Schaltwerken GP1 bis GPn abgegeben werden, werden über den Weg c übertragen.

Wie bereits erwähnt wurde, und wie ganz allgemein bekannt, weist das zentrale Schaltwerk ja hinsichtlich seiner Informations-Verarbeitungskapazität - und sei es noch so leistungsfähig - eine begrenzte Leistungsfähigkeit auf. Diese Leistungsfähigkeit betrifft die Anzahl von Informationsverarbeitungsvorgängen, die pro Zeiteinheit abgewickelt werden können. Die Belastbarkeit eines jeden zentralen Schaltwerkes hängt grundsätzlich von seinem Aufbau (Struktur, Programmabwicklung und Befehlsausführungsgeschwindigkeit) und von der Art der ihm laufend übertragenen Informationsverarbeitungsvorgänge ab. Diese sind in der Regel von unterschiedlicher Art. Sie treten gemischt auf; die Belastbarkeit betrifft deshalb die jeweils gegebene Mischung von Informationsverarbeitungsaufträgen.

Eine Belastbarkeitsmessung unterscheidet sich von einer Belastungsmessung u.a. dadurch, daß auch bei Unterbelastung ermittelt wird, welche Anzahl von pro Zeiteinheit anfallenden Informationsverarbeitungsaufträgen bzw. Initialschaltkennzeichen zu welcher Schaltwerks-Belastung führt, und daß im Hinblick auf eine volle Schaltwerks-Belastung ermittelt wird, welche Anzahl von Informationsverarbeitungsaufträgen bzw. Initialschaltkennzeichen pro Zeiteinheit maximal akzeptiert werden könnte.

Die Erfahrung lehrt nun, daß die Zusammensetzung von Informationsverarbeitungsvorgängen verschiedener Art während des Betriebes eines zentralen Schaltwerkes sich in der bereits angedeuteten Weise verschieben kann. So kann es zum Beispiel sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. In diesem Zusammenhang spricht man auch von einem sich ändernden Verkehrsspektrum, das unterschiedliche Zusammensetzungen hinsichtlich der verschiedenen Arten von möglichen Verbindungen aufweisen kann. Darüber hinaus kann der Anteil von jeweils vor vollständiger Verbindungsherstellung abgebrochenen Belegungen an der Gesamtheit der Verbindungsherstellungsvorgänge zu bestimmten Tageszeiten größer sein als zu bestimmten anderen Tageszeiten. In diesem Zusammenhang spricht man auch von einem sich ändernden Belegungsspektrum bezüglich Anteil und Vollständigkeitsgrad der Belegungsversuche.

Aus den verschiedenen zuvor angegebenen Gründen ist die Belastbarkeit bezüglich der Anzahl der eintreffenden Belegungsversuche eines zentralen Schaltwerks nicht konstant. Um ein zentrales Schaltwerk optimal auszulasten, ist es deshalb zweckmäßig, die zu den verschiedenen Betriebszeiten aufgrund der unterschiedlichen Voraussetzungen gegebenen unterschiedlichen Belastbarkeiten zu berücksichtigen. Deshalb ist es zweckmäßig, solche Steuerwerke mit Meßeinrichtungen zur Bestimmung der Belastbarkeit auszustatten, die die stets schwankende Belastung integrieren, und zwar über Zeiträume, die jeweils groß genug sind, um ein Bestimmungsergebnis mit ausreichender Ergebnisgenauigkeit zu gewährleisten, wobei also Kurzzeitschwankungen nicht zum Tragen kommen.

Eine dem zuvor angegebenen Zweck dienende Meßeinrichtung B kann auf verschiedenerlei Art und Weise arbeiten. Generell geht es darum, bei und aufgrund von jeweils gegebener Belastung, also einer Ist-Belastung festzustellen, wie groß die Belastung tatsächlich sein müßte (also eine Soll-Belastung, d.h. eine den jeweils gegenwärtigen Betriebsverhältnissen entsprechende Belastbarkeit), damit sich letztendlich praktisch ein grundsätzlich angestrebter Verkehrswert von z.B. 90%, 95%, 98% oder 100% daraus ergibt. Ein solcher Verkehrswert von 100% wäre theoretisch denkbar. Da jedoch das Belastungsverhalten eine innere Dynamik aufweist, erweist es sich als zweckmäßig, einen Verkehrswert von etwas unter 100% vorzusehen, damit ein als Eingabeliste bezeichneter Durchlaufspeicher für zu verarbeitende Informationen sich bei schwankender Belastung nicht nur allmählich füllt, sondern auch die Chance hat, sich allmählich wieder zu leeren.

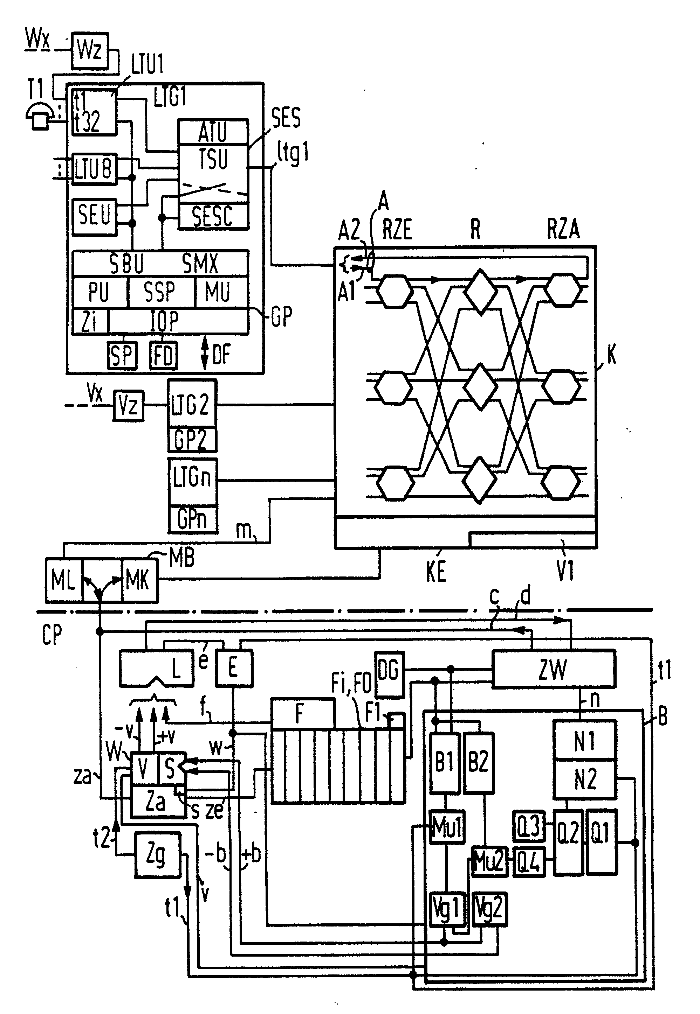

Eine Belastbarkeitsmeßeinrichtung (B) kann nun grundsätzlich zum Beispiel auf der Basis arbeiten, daß sie in Meßzeiträumen von zum Beispiel je vier Sekunden die zeitlichen Anteile erfaßt, mißt und aufsummiert, in denen das betreffende zentrale Schaltwerk für Verarbeitungsvorgänge tatsächlich in Anspruch genommen ist, daß sie mittels Teilung des Zeitwertes des mit dem angestrebten Verkehrswert multiplizierten Meßzeitraumes durch die gebildete Summe einen Quotienten bildet, und daß sie die in jeweils einer Meßperiode gezählten Informationsverarbeitungsvorgänge mit dem Quotienten multipliziert. Hierbei kann die erwähnte Erfassung und Messung und Summenbildung auch entsprechend der gemäß Fig. 1 getroffenen Realisierung des Ausführungsbeispieles der Erfindung dahingehend variiert werden, daß zur Erfassung der Gesamtzeit, in der das zentrale Schaltwerk für Verarbeitungsvorgänge in Anspruch genommen ist, das zentrale Schaltwerk nach jeweils erfolgter Abarbeitung sämtlicher vorliegender Informationsverarbeitungsaufträge bis zum Eintreffen eines neuen Informationsauftrages ein in konstanten Zeitabständen gegebenes Anforderungssignal erzeugt, das u.a. der Meßeinrichtung B zugeführt wird. Diese Meßeinrichtung zählt nun über bestimmte Zeiträume gleicher Größe hinweg, zum Beispiel über jeweils vier Sekunden hinweg, die Anzahl solcher aufgetretener Anforderungssignale im zentralen Schaltwerk.

In der Zeichnung ist eine dem zentralen Schaltwerk CP zugeordnete und mit ihm über eine Leitung n verbundene Meßeinrichtung B dargestellt. Vom zentralen Schaltwerk erhält sie also über diese Leitung n das Anforderungssignal bei seinem jedesmaligen Auftreten. Die Meßeinrichtung B zählt in an sich bekannter Weise die Anforderungssignale mit Hilfe eines Zählers N1 ab. Von einer zentralen Zeitgebereinrichtung Zg erhält sie in Abständen von 4 Sekunden außerdem ein Zeitmarkierungssignal über die Leitung t1. Dieses Zeitmarkierungssignal bedeutet für einen Meßzeitraum das Ende und zugleich den Beginn für den jeweils nächstfolgenden Meßzeitraum. Die Meßeinrichtung B ermittelt nun mittels des Zählers N1 die Anzahl der zwischen zwei solchen Zeitmarkierungen, also in jeweils einem Meßzeitraum eintreffenden Anforderungssignale des jeweiligen zentralen Schaltwerks. Liegen Informationsverarbeitungsaufträge über längere Zeit nicht vor, so werden diese Anforderungssignale innerhalb eines Meßzeitraumes kontinuierlich und in Zeitintervallen abgegeben, die jeweils einem Informationsverarbeitungsvorgang im Mittel entsprechen.

Die Meßeinrichtung B zählt also jeweils innerhalb eines Meßzeitraumes die erhaltenen Anforderungssignale und leitet aus der so gewonnenen Anzahl von im betreffenden Meßzeitraum eingetroffenen Anforderungssignalen denjenigen zeitlichen Anteil von demselben ab, währenddessen das zentrale Schaltwerk für Informationsverarbeitungsvorgänge nicht in Anspruch genommen ist. Hieraus bildet sie unter Subtraktion dieses zeitlichen Anteils von dem Meßzeitraum bei Ende des durch erneutes Eintreffen des Zeitmarkierungssignales über die Leitung t1 signalisierten jeweiligen Meßzeitraumes einen Komplementärwert mit Hilfe eines Komplementärwertbildners N2. Ferner mißt die Meßeinrichtung in einer Einrichtung Q1 die Dauer eines Meßzeitraumes (Abstand zweier Zeitmarkierungssignale über die Leitung t1) und teilt diesen Wert in einer Einrichtung Q2 durch den vom Komplementärwertbildner N2 erhaltenen Komplementärwert. Hierdurch wird der genannte Quotient gewonnen. Diesen multipliziert sie ($Q3/Q4$) mit dem Faktor von z.B. 0,95 (beispielsweise angestrebter Verkehrswert) und gibt das gewonnene Produkt weiter. Ferner zählt die Meßeinrichtung die Anzahl der in dem betreffenden Meßzeitraum tatsächlich ausgeführten Verarbeitungsaufträge und multipliziert diese Anzahl mit dem zuvor genannten Produkt. Dies ergibt dann diejenige Anzahl von Verarbeitungsaufträgen, durch die das zentrale Schaltwerk bei den jeweils gegenwärtigen Betriebsverhältnissen tatsächlich mit einem Verkehrswert von z.B.95% ausgelastet werden würde. Die Meßeinrichtung vergleicht diese Anzahl mit einer bei einem früheren Meßvorgang ermittelten und gespeicherten Anzahl.

Je nach dem pro Meßzeitraum gewonnenen Ergebnis gibt die Meßeinrichtung B entweder überhaupt kein Signal zu einem Belegungsratenzähler W hin ab, oder sie gibt bei zu niedriger - bzw. zu hoher - Belastung des zentralen Schaltwerkes (wenn also die Soll Belastbarkeit von 95% höher - bzw. niedriger - als die zur Zeit tatsächlich vorliegende Belastung des zentralen Schaltwerks ist), ein Steigerungssignal über den Weg +b - bzw. ein Herabsetzungssignal über den Weg -b zum Belegungsratenzähler W hin ab.

Das zentrale Schaltwerk CP erhält von einem Durchlaufspeicher FiFo in an sich bekannter Weise sukzessive nacheinander Informationsverarbeitungsaufträge. Ist der Durchlaufspeicher FiFo leer, so gibt eine Anzeigeeinrichtung F1 ein Signal zu einer Datengebereinrichtung DG. Diese Datengebereinrichtung enthält gespeichert betriebstechnische Daten-Verarbeitungsaufträge für Funktionsprüfvorgänge sowie für einen dem Aufbau einer Vermittlungsanlage entsprechenden, dem Vermittlungsbetrieb dienenden und hierfür zu speichernden Datenbestand. Daten-Verarbeitungsaufträge für Funktionsprüfvorgänge können zum Beispiel Verbindungsherstellungsdaten für Prüfverbindungen sein oder Daten umfassen, die Prüfprogramme für eine Überprüfung der vom zentralen Schaltwerk regelmäßig durchzuführenden Verarbeitungsvorgänge bilden. Solche Daten-Verarbeitungsaufträge können auch Daten umfassen, die zur Abwicklung von Meßprogrammen dienen. Ferner können solche Daten-Verarbeitungsaufträge auch dazu dienen, einen dem Aufbau einer Vermittlungsanlage und ihrer Beschaltung mit Leitungen entsprechenden Datenbestand zu schaffen, zu speichern und jeweils bedarfsgemäß zu modifizieren. Dieser Datenbestand, der dem Aufbau und der Beschaltung einer Vermittlungsanlage mit Leitungen und Kanälen von Übertragungssystemen entspricht, ist gespeichert und muß laufend auf neuestem Stand gehalten werden.

Das zentrale Schaltwerk CP wird also einerseits durch Informations-Verarbeitungsaufträge in Anspruch genommen, die im wesentlichen durch wählende Teilnehmer verursacht werden. Das zentrale Schaltwerk CP ist außerdem aber auch mit Daten-Verarbeitungsaufträgen in Anspruch genommen, die in der genannten Datengebereinrichtung DG gespeichert und von ihr abgegeben werden. Es kann vorgesehen sein, daß die Datengebereinrichtung Daten-Verarbeitungsaufträge nur abgibt, wenn die Anzeigeeinrichtung F1 anzeigt, daß der Durchlaufspeicher FiFo völlig leer ist. Es kann aber auch vorgesehen sein, daß das zentrale Schaltwerk abwechselnd Informations-Verarbeitungsaufträge und Daten-Verarbeitungsaufträge abwickelt, wenn die Anzahl der im Durchlaufspeicher gespeicherten Informations-Verarbeitungsaufträge eine bestimmte geringe Maximalanzahl nicht übersteigt. Die Anzeigeeinrichtung F1 signalisiert der Datengebereinrichtung DG die Tatsache, daß kein Informations-Verarbeitungsauftrag mehr im Durchlaufspeicher gespeichert ist oder die Tatsache, daß nicht mehr als eine bestimmte geringe Maximalanzahl von Informations-Verarbeitungsaufträgen im Durchlaufspeicher gespeichert sind. Zusammenfassend ist also festzustellen, daß die Informations-Verarbeitungsaufträge gegenüber den Daten-Verarbeitungsaufträgen von dem zentralen Schaltwerk mit einem Vorrang aufgenommen werden, gemäß dem Daten-Verarbeitungsaufträge nur aufgenommen werden, wenn weniger als eine maximale Anzahl von Informations-Verarbeitungsaufträgen für dasselbe vorliegen.

Wie bereits ausgeführt wurde, gibt das zentrale Schaltwerk CP dann, wenn es weder durch Informations-Verarbeitungsaufträge noch durch Daten-Verarbeitungsaufträge in Anspruch genommen ist, Anforderungssignale über den Weg n zu einem Zähler N1 hin ab, der die jeweils während eines Meßzeitraumes eintreffenden Anforderungssignale zählt. Diese Anforderungssignale werden dann, wenn das zentrale Schaltwerk durch Verarbeitungsaufträge stetig nicht in Anspruch genommen ist, in zeitlichen Abständen gegeben, die jeweils etwa der Dauer der Abwicklung eines Verarbeitungsauftrages entsprechen. Die Anzahl der pro Meßzeitraum vom Zähler N1 aufgenommenen Anforderungssignale ist also ein Maß für die Zeit, in der das zentrale Schaltwerk jeweils innerhalb eines Meßzeitraumes für Verarbeitungsaufträge nicht in Anspruch genommen wurde.

Wie bereits ebenfalls ausgeführt wurde, dient der Komplementärwertbildner N2 dazu, unter Bezugnahme auf die Dauer eines jeden Meßzeitraumes einen Komplementärwert zu bilden, der ein Maß dafür darstellt, wie lange das zentrale Schaltwerk jeweils während eines Meßzeitraumes für Verarbeitugnsvorgänge in Anspruch genommen wurde. Der Komplementärwertbildner N2 liefert den von ihm ermittelten Komplementärwert am Ende eines jeweiligen Meßzeitraumes an eine Teilungseinrichtung Q2.

Mit Hilfe einer Zeitmeßeinrichtung Q1 werden die über die Leitung t1 übertragenen Zeitmarkierungssignale aufgenommen, und es wird die Dauer eines jeden Meßzeitraumes mit Hilfe der Zeitmeßeinrichtung Q1 abgemessen. Der jeweils ermittelte Meßwert gibt also die jeweilige Dauer des betreffenden Meßzeitraumes an. Das die Dauer dieses Meßzeitraumes angebende Meßergebnis, das der Teilungseinrichtung Q2 von der Zeitmeßeinrichtung Q1 zugeführt wurde, wird nun am Ende eines jeden Meßzeitraumes durch den in der Teilungseinrichtung Q2 vom Komplementärwertbildner N2 übernommenen Komplementärwert geteilt. Das Ergebnis des in der Teilungseinrichtung Q2 durchgeführten Divisionsvorganges ergibt einen Quotienten (s.o.!) der angibt, um wieviel länger die Dauer des betreffenden Meßzeitraumes gegenüber der Gesamtdauer ist, während welcher das zentrale Schaltwerk CP innerhalb des betreffenden Meßzeitraumes für Verarbeitungsvorgänge tatsächlich nur in Anspruch genommen war.

Die Meßeinrichtung B enthält ferner auch noch zwei Zähler B1 und B2. Mit Hilfe des Zählers B1 werden sämtliche während eines Meßzeitraumes dem zentralen Schaltwerk CP zugeführten Verarbeitungsaufträge, also sowohl Informations-Verarbeitungsaufträge über den Ausgang des FiFo-Speichers als auch Daten-Verarbeitungsaufträge über den Ausgang der Datengebereinrichtung DG gezählt. Mit Hilfe des Zählers B2 werden dagegen nur sämtliche während eines Meßzeitraumes dem zentralen Schaltwerk zugeführten Informations-Verarbeitungsaufträge gezählt.

In einem Multiplizierer Q3 ist ein Verkehrswert von zum Beispiel 95% gespeichert, durch den für das zentrale Schaltwerk B festgelegt ist, daß es während 95% seiner gesamten für Verarbeitungsaufträge zur Verfügung stehenden Zeit mit der Abwicklung solcher Verarbeitungsaufträge beschäftigt sein soll, und zwar für Verarbeitungsaufträge beiderlei Art, nämlich Informations-Verarbeitungsaufträge und Daten-Verarbeitungsaufträge. In einem weiteren Multiplizierer Q4 ist ein anderer Verkehrswert, und zwar ein etwas niedrigerer Verkehrswert von zum Beispiel 85% gespeichert, durch den für das zentrale Schaltwerk B festgelegt ist, daß es während der gesamten für Informations-Verarbeitungsaufträge und Daten-Verarbeitungsaufträge zur Verfügung stehenden Zeit zu 85% mit der Abwicklung von Informations-Verarbeitungsaufträgen beschäftigt sein soll. Beiden Multiplizierern wird der von der Teilungseinrichtung Q2 gebildete Quotient zugeführt und in beiden Multiplizierern wird das Produkt jeweils aus diesem Quotienten und dem gespeicherten konstanten Verkehrswert gebildet.

Vom Multiplizierer Q3 wird das gebildete Produkt einem weiteren Multiplizierer Mu1 zugeführt, der außerdem vom Zähler B1 die Anzahl von Verarbeitungsvorgängen erhält, die das zentrale Schaltwerk ZW in dem betreffenden Meßzeitraum insgesamt abgewickelt hat, und zwar also sowohl Informations-Verarbeitugnsvorgänge als auch Daten-Verarbeitungsvorgänge. In dem Multiplizierer Mu1 wird ein Produkt gebildet, das einem Vergleicher Vg1 zugeführt wird. Dieses Produkt gibt die Anzahl von Verarbeitungsvorgängen insgesamt an, die das zentrale Schaltwerk bei den jeweils gegenwärtigen Betriebsverhältnisses abwickeln könnte, und zwar Informations-Verarbeitungsvorgänge und Daten-Verarbeitungsvorgänge insgesamt. Dabei ist berücksichtigt, daß das zentrale Schaltwerk nur zu 95% seiner Zeit ausgelastet werden soll, wie oben angegeben.

Im Vergleicher Vg1 ist diejenige Anzahl von Verarbeitungsvorgängen gespeichert, die auch im Zähler W gespeichert ist. Wird vom Multiplizierer Mu1 am Ende eines Meßzeitraumes das genannte Produkt gebildet, so wird dieses dem Vergleicher Vg1 zugeführt. Hier wird ein Vergleich zwischen dem neu zugeführten Produkt einerseits und dem gespeicherten Wert andererseits durchgeführt. Ist das Produkt größer als der gespeicherte Wert, so wird auch der gespeicherte Wert dementsprechend erhöht und über den Weg +b wird ein entsprechendes Steigerungssignal zum Belegungsratenzähler W hin abgegeben, wo es eine Erhöhung des gespeicherten Wertes um eine oder mehrere Einheiten signalisiert.

Ist dagegen das vom Multiplizierer Mu1 gebildete Produkt kleiner als der entsprechende Wert im Vergleicher Vg1, so ist dies ein Kriterium dafür, daß die Anzahl der pro Meßzeitraum vom zentralen Schaltwerk CP durchzuführenden Verarbeitungsvorgänge insgesamt kleiner ist als bisher. In diesem Fall wird ein entsprechendes Signal vom Vergleicher Vg1 zum Multiplizierer Mu2 gegeben. Dieses Signal sagt also aus, daß dem zentralen Schaltwerk ZW momentan mehr Verarbeitungsvorgänge insgesamt zugeführt werden, als ihm zugeführt werden sollten.- Dem Multiplizierer Mu2 wird der vom Zähler B2 gebildete Zählwert am Ende eines Meßzeitraumes zugeleitet, der die Anzahl von Informations-Verarbeitungsvorgängen angibt, die dem zentralen Schaltwerk CP in dem betreffenden Meßzeitraum zugeführt würden. Ferner wird dem Multiplizierer Mu2 vom Multiplizierer Q4 ein Produkt zugeführt, welches sich aus dem oben erwähnten Quotienten einerseits und demjenigen Verkehrswert andererseits ergibt, durch den für das zentrale Schaltwerk CP festgelegt ist, welcher Anteil seinerseits insgesamt für eine Abwicklung von Informations-Verarbeitungsaufträgen verwendet werden soll. Der Multiplizierer Mu2 bildet aus den ihm zugeführten Werten ein Produkt und leitet es dem Vergleicher Vg2 zu.

Die Vergleicher Vg1 und Vg2 enthalten gespeicherte Vergleichswerte. Während der Vergleicher Vg1 als Vergleichswert die Anzahl von pro Meßzeitraum zu verarbeitenden Verarbeitungsaufträgen insgesamt (Informations-Verarbeitungsaufträge plus Daten-Verarbeitungsaufträge) enthält, enthält der Vergleicher Vg2 die Anzahl von pro Meßzeitraum zu verarbeitenden Informations-Verarbeitungsaufträgen. Zunächst bei Inbetriebnahme sind diese beiden Werte theoretisch ermittelte und eingespeicherte Werte oder empirisch gewonnene Mittelwerte.- Immer, wenn nun der Vergleichswert im Belegungsratenzähler W erhöht oder erniedrigt wird, wird auch der in jedem der beiden Vergleicher Vg1 und Vg2 gespeicherte Wert in gleichem Maße erhöht bzw. erniedrigt.

Der Vergleicher Vg2 nimmt nun einen Vergleich zwischen dem erhaltenen Produkt einerseits und dem gespeicherten Wert vor. Ist das Produkt größer als der gespeicherte Wert, so bedeutet dies, daß die Anzahl von Informations-Verarbeitungsaufträgen, die dem zentralen Schaltwerk ZW pro Meßzeitraum zugeführt werden, größer sein kann. In diesem Falle gibt der Vergleicher Vg2 ein entsprechendes Steigerungssignal über den Weg +I zum Belegungsratenzähler W hin ab. Ist dagegen das Produkt kleiner als der im Vergleicher Vg2 gespeicherte Wert, so gibt der Vergleicher ein entsprechendes Minderungssignal über den Weg -b zum Belegungsratenzähler W hin ab. In den Fällen, in denen das dem einen und dem anderen der beiden Vergleicher zugeführte Produkt gleich dem im betreffenden Vergleicher gespeicherten Wert ist, wird der im Belegungsratenzähler W gespeicherte Wert nicht verändert.

Wie zuvor ausgeführt wurde, wird das Steigerungssignal - bzw. das Herabsetzungssignal - von der Meßeinrichtung B dem Belegungsratenzähler W zugeführt. In ihm ist ein weiter unten erklärter Vergleichswert (Regelnormal) gespeichert. Dieser wird bei Erhalt des Steigerungssignales - bzw. des Herabsetzungssignales - erhöht - bzw. erniedrigt. Diese Signale, d.h. jeweils das eine oder das andere, werden von der Meßeinrichtung B dem Belegungsratenzähler W zugeführt. Diesen Belegungsratenzähler durchlaufen sämtliche Informations-Verarbeitungsaufträge, die über die Leitung za eintreffen und über die Leitung ze weitergegeben werden. Bei diesen Informationsverarbeitungsaufträgen handelt es sich teilweise um Initialaufträge und teilweise um Nachfolgeaufträge. Die zur Herstellung einer Verbindung von einem rufenden Teilnehmer abgegebenen Schaltkennzeichen bestehen aus einem Initial-Schaltkennzeichen an erster Stelle (Anrufsignal) und aus Nachfolge-Schaltkennzeichen, die in Zeitabständen, die durch die Art und Weise des jeweils rufenden Teilnehmers bedingt sind, eintreffen. Im Zusammenhang mit jeweils einer Verbindungsherstellung gehören also immer ein Initial-Schaltkennzeichen und eine Anzahl von Nachfolge-Schaltkennzeichen zusammen. Nachfolge-Schaltkennzeichen können darüber hinaus jeweils im Zusammenhang mit einer Verbindungsherstellung das Wahlendekennzeichen, das Meldekennzeichen, das Endekennzeichen und dergleichen sein, also Leitungskennzeichen, sowie Gebührenzählimpulse. Diese Schaltkennzeichen werden mit Hilfe eines dezentralen Schaltwerks (teilzentrales Schaltwerk) GP1 aufgenommen; aus ihnen ergeben sich Informationsverarbeitungsaufträge, die gemäß der Unterscheidung der Schaltkennzeichen in Initial-Schaltkennzeichen und Nachfolge-Schaltkennzeichen ebenfalls zu unterscheiden sind, und zwar in Initialaufträge und Nachfolgeaufträge.

Über die Leitung za treffen nun sukzessive nacheinander Informationsverarbeitungsaufträge ein. Diese bestehen zu einem kleineren Teil aus Initialaufträgen und zu einem größeren Teil aus Nachfolgeaufträgen. Diese Informationsverarbeitungsaufträge treffen bezüglich der verschiedenen Verbindungsherstellungsvorgänge ungeordnet, d.h. also gemischt ein. Sie durchlaufen den Belegungsratenzähler und werden in einem FiFo-Speicher gespeichert. Dieser FiFo-Speicher weist in bekannter Weise eine größere Anzahl von Speichereinheiten auf, wobei jeweils eine Speichereinheit zur Speicherung eines Informationsverarbeitungsauftrages dient. In der gleichen Reihenfolge, wie die Informationsverarbeitungsaufträge über die Leitung ze zum FiFo-Speicher gegeben werden, werden sie auf Abruf durch das zentrale Schaltwerk CP/ZW über die Leitung h vom FiFo-Speicher zu diesem zentralen Schaltwerk weitergegeben.

Der Belegungsratenzähler W dient nun als eine weitere Meßeinrichtung zur Bestimmung eines Abweichens der kurzzeitig später zu erwartenden Informationsverarbeitungs-Arbeitsbelastung des zentralen Schaltwerks von seiner Leistungsfähigkeit. Der Belegungsratenzähler W, der von sämtlichen Informationsverarbeitungsaufträgen durchlaufen wird, kann nun so arbeiten, daß er diese alle zählt. Vorzugsweise aber ist vorgesehen, daß er von diesen lediglich die Initialaufträge zählt.

Für diese Zählung (wie zuvor angegeben in der einen oder anderen Weise) bestehen jeweils zwei Möglichkeiten. Die eine Möglichkeit besteht darin, daß eine zum Beispiel jede Sekunde über die Leitung t2 zum Belegungsratenzähler übertragene Zeitmarkierung in dem Belegungsratenzähler W jeweils einen Zählvorgang startet bzw. stoppt, und daß ein zwischen je zwei Zeitmarkierungen gewonnenes Zählergebnis mit dem Vergleichswert verglichen wird. Die andere Möglichkeit besteht darin, daß ein Zähler durch die Initialaufträge vorwärtsgeschaltet wird und in gleichmäßigen Zeitabständen unabhängig von den Initialaufträgen rückwärtsgeschaltet wird, und daß der Vergleichswert eine Anzahl von Rückwärtsschaltvorgängen bewirkt, die jeweils zwischen zwei in gleicher Weise wie in den zuvor angegebenen Zeitmarkierungen ausgeführt werden.

Es ist also für Initialaufträge (Initial-Schaltkennzeichen) und Nachfolgeaufträge (Nachfolge-Schaltkennzeichen) ein gemeinsamer FiFo-Speicher vorgesehen; der Belegungsratenzähler W selektiert - wie im weiteren angenommen sie - von den dem FiFo-Speicher zugeführten Informationsverarbeitungsaufträgen (Schaltkennzeichen) die Initialaufträge, um den Zählvorgang nur auf diese zu beschränken. Wie ausgeführt, führt der Belegungsratenzähler W die Zählung in aufeinanderfolgenden Zählzeitintervallen durch, die durch die genannten Zeitmarkierungen begrenzt sind; er wird jeweils nach Ablauf eines Zählzeitintervalles durch die Zeitmarkierung in seine Ausgangsposition zurückgestellt und liefert ein am Ende eines jeden Zählzeitintervalles mit einem Vergleichswert zu vergleichendes Zählergebnis. Dieser Vergleichswert (Regelnormal) stellt einen Schwellenwert dar. Die andere Möglichkeit besteht darin, daß der Belegungsratenzähler W durch die Initialaufträge vorwärtsgeschaltet und kontinuierlich schrittweise zurückgeschaltet wird. In diesem Falle hält der Belegungsratenzähler also jederzeit ein Zählergebnis bereit, das einem andauernden, wenigstens aber einmal pro Vorwärtszählvorgang und/oder pro Rückschaltevorgang anhand eines Schwellenwertes durchgeführten Vergleichsvorgang unterworfen wird.

In beiden Fällen der speziellen Ausbildung des Belegungsratenzählers W, wie sie zuvor beschrieben wurden, wird aufgrund einer Überschreitung des Schwellenwertes die Zufuhr von Initialaufträgen (Initial-Schaltkennzeichen) zum FiFo-Speicher gedrosselt, wodurch eine Annahme aller auch jeweils zu einem Initialauftrag (Initial-Schaltkennzeichen) gehörenden Nachfolgeaufträge (Nachfolge-Schaltkennzeichen) verhindert ist. Um dies nun zu bewerkstelligen, ist eine Restriktionseinrichtung L vorgesehen. Überschreitet in dem Belegungsratenzähler W der Zählwert den Schwellenwert, also den Vergleichswert, so gibt der Belegungsratenzähler W ein Minderungssignal über die Leitung -v zur Restriktionseinrichtung L. Ist die Überschreitung des Schwellenwertes durch den Zählwert wieder behoben, so gibt der Belegungsratenzähler W ein Mehrungssignal +v zur Restriktionseinrichtung L hin ab. Die Abgabe eines Minderungssignales oder Mehrungssignales vom Belegungsratenzähler W zur Restriktionseinrichtung L erfolgt in gleichmäßigen Zeitabständen von zum Beispiel 1 Sekunde.

Die Restriktionseinrichtung L dient nun dazu, in den Anschlußgruppen LTG1 bis LTGn zu bewirken, daß hier ein bestimmter Prozentsatz von Verbindungsherstellungsversuchen abgewiesen wird. Dadurch soll die Menge der einfallenden Informationsverarbeitungsaufträge reduziert werden. Hierzu ist in jedem der dezentralen Schaltwerke GP ein Speicher Zi vorgesehen, in dem der Prozentsatz von Anrufsignalen gespeichert ist, die bei einer Erkennung von Informationsverarbeitungs-Verkehrsüberlastungen zur Abwehr solcher Überlastungen abgewiesen werden sollen. In diesem Speicher sind zum Beispiel die Prozentsätze 0 %, 25 %, 33,3 %, 50 % und 75 % speicherbar. Diese Prozentsätze geben an, welcher Anteil der eintreffenden Anrufsignale abzuweisen ist. Unter Abweisung ist zu verstehen, daß bei Eintreffen eines Anrufsignales an den betreffenden Teilnehmer ein dementsprechendes Signal ausgesendet wird, zum Beispiel Besetztsignal oder ein zum Warten aufforderndes Signal oder eine Ansage, und daß verhindert wird, daß von ihm abgegebene Wahlkennzeichen aufgenommen und weitergeleitet werden. Ebensogut ist es auch möglich, anstelle eines Prozentsatzes für abzuweisende Anrufsignale auch einen Prozentsatz für anzunehmende Anrufsignale, also eine "Durchlaßquote" zu speichern.-Die Abweisung von Anrufsignalen mittels einer Abweiseinrichtung kann nach dem Abzählprinzip erfolgen, wobei also ein jeweils rufender Teilnehmer zufällig Erfolg oder Mißerfolg haben kann mit seinem Verbindungsherstellungsversuch, oder es kann auch unterschieden werden zwischen Anrufen von Teilnehmern und Leitungen verschiedener Prioritätsklassen.

Daten über den jeweiligen Prozentsatz von abzuweisenden bzw. durchzulassenden Initialaufträgen werden von der Restriktionseinrichtung L zu den dezentralen Schaltwerken GP1 übertragen und in ihnen gespeichert. Eine solche Übertragung dieser Daten findet entweder laufend statt oder immer nur dann, wenn eine Vergrößerung oder Verkleinerung dieses Prozentsatzes zu melden ist. In den dezentralen Schaltwerken für die Speicherung des Prozentsatzes vorgesehenen Speicherschaltmitteln $Z_i$ wird immer bei Eintreffen von eine Vergrößerung bzw. eine Verkleinerung des Abweisungsprozentsatzes meldenden Daten schrittweise der gespeicherte Prozentsatz verringert bzw. vergrößert.

Es ist nun vorgesehen, daß diese der Meldung der Vergrößerung bzw. Verkleinerung des Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln $Z_i$ übertragen werden. Hierzu ist die Restriktionseinrichtung L mit dem zentralen Schaltwerk CP/ZW über die Leitung d verbunden. Sie meldet über diesen Weg Daten bezüglich des geltenden bzw. einzustellenden Prozentsatzes. Das zentrale Schaltwerk CP/ZW gibt diese Daten, die jeweils Daten relativ geringen Informationsinhaltes sind, den der Abwicklung der Vermittlungsvorgänge dienenden Einstell- und Steuerinformationen bei, die also vom zentralen Schaltwerk zu den dezentralen Schaltwerken laufend übertragen werden. Es ist also nicht erforderlich, daß für die Übertragung der den jeweiligen Prozentsatz betreffenden Daten eigene Nachrichten-Transaktionen gestartet werden müssen, sondern diese Daten werden den Einstell- und Steuerinformationen für die Verbindungsherstellung beigegeben. Da der Datenaustausch mit den verschiedenen Anschlußgruppen unterschiedlich intensiv ist, werden die den jeweiligen Prozentsatz meldenden Daten also besonders schnell zu denjenigen dezentralen Schaltwerken hin transportiert, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase gleich starker Lastabwehr nicht erforderlich, Daten hierüber vom zentralen Steuerwerk zu den dezentralen Steuerwerken zu übertragen, die die Informationsverarbeitungs-Verkehrsüberlastung betreffen. Treten Informationsverarbeitungs-Verkehrsüberlastungen von einer Anschlußgruppe her auf, so werden die betreffenden Restriktionsdaten zuerst zu dieser hin gemeldet.

Die Informationsverarbeitungsaufträge (Schaltkennzeichen) treffen in ihrer jeweiligen zeitlichen Folge also gemischt hinsichtlich verschiedener Serien (eine Serie entspricht immer einem Verbindungsherstellungsvorgang) aufeinanderfolgend ein; sie zeigen ihre jeweilige Serienzugehörigkeit durch eine jedem Schaltkennzeichen beigegebene Ursprungsadresse an. Diese Ursprungsadresse gibt die jeweilige Zuordnung zu der Teilnehmeranschlußschaltung eines rufenden Teilnehmers oder einem Verbindungssatz oder einer Leitungsabschlußschaltung oder dergleichen, also zu einer der genannten verbindungsindividuellen Schalteinrichtungen an.

Es ist vorgesehen, daß nach einer erfolgten Abwehr einer Informationsverarbeitungs-Verkehrsüberlastung bei einer Abnahme eines entsprechenden Staus an Informationsverarbeitungs-Anforderungen und nach einem Rückgang des von der Restriktionseinrichtung L an das Schaltwerk CP/CW (zur oben beschriebenen Verteilung an die dezentralen Schaltwerke GP1) abgegebenen Abweisungs-Prozentsatzes auf den Wert Null und nach Ablauf einer festgelegten, vom Zeitpunkt dieser Rücksetzung gemessenen Mindest-Karenzzeit von zum Beispiel 12 Sekunden, während der also für den für die Belastbarkeit maßgebenden Belastbarkeitsmeßwert aufgrund des Rückganges der tatsächlichen Belastung stets höhere Werte eingestellt werden, die Regelung des im Speicher S des Zählers W gespeicherten Vergleichswertes vorläufig beendet wird. Diese Regelung erfolgte anhand des von der Meßeinrichtung B gewonnenen Belastbarkeitsmeßergebnisses und anhand des daraus gebildeten Divisionsergebnisses.

Zur Abmessung der zuvor erwähnten Mindest-Karenzzeit ist eine Indikationseinrichtung E vorgesehen. Diese ist über eine Leitung e mit dem Ausgang der Restriktionseinrichtung L verbunden. Über diese Leitung e empfängt die Indikationseinrichtung E den jeweils von der Restriktionseinrichtung L ermittelten Abweisungsprozentsatz. Ferner ist die Indikationseinrichtung E über die Leitung t1 mit der Zeitgebereinrichtung Zg verbunden. Wenn ununterbrochen eine längere Zeit, zum Beispiel 12 Sekunden, keine Informationsverarbeitungs-Verkehrsüberlastung vorgelegen hat, also der Abweisungs-Prozentsatz auch so lange ununterbrochen den Wert Null gehabt hat, wird die Belastbarkeitsmessung deaktiviert. Hierzu überwacht die Indikationseinrichtung E also jeweils beginnend vom Zeitpunkt der Rücksetzung des Abweisungs-Prozentsatzes in der Restriktionseinrichtung L während der von diesem Zeitpunkt an gemessenen Mindest-Karenzzeit, daß dieser Prozentsatz auf dem Wert Null verbleibt. Wird diese Bedingung erfüllt, so gibt die Indikationseinrichtung E über den Signalweg w ein entsprechendes Signal zum Belegungsratenzähler W hin ab.

Ebenfalls zu Beginn der Mindest-Karenzzeit, also jedesmal dann, wenn der von der Restriktionseinrichtung L angegebene Abweisungsprozentsatz den Wert Null erreicht, gibt die Indikationseinrichtung E ein Signal über den Signalweg w zum Belegungsratenzähler W hin weiter, das den Beginn einer potentiellen Mindest-Karenzzeit kennzeichnet. Dieses Signal bewirkt im Belegungsratenzähler W, daß der momentan im Speicher S gespeicherte Vergleichswert in einen Zusatzspeicher s übertragen und hier gespeichert wird. Ein in diesen gegebenenfalls bereits früher gespeicherter Vergleichswert wird dabei zugleich gelöscht.

Während der Mindest-Karenzzeit ist ja definitionsgemäß der Abweisungsprozentsatz ununterbrochen gleich Null. Abweisungen waren also während dieser Zeit nicht erforderlich. In der Regel ist dies durch einen entsprechenden Belastungs-Rückgang verursacht. Dieser nun hat während der Mindest-karenzzeit dafür gesorgt, daß der Vergleichswert des Zählers W, gespeichert in seinem Speicher S, laufend mit positiver Tendenz nachgeregelt wurde, also allmählich einen relativ hohen Wert angenommen hat. Praktisch bedeutet dies, daß bei einem Wiederanwachsen des Zustromes von Informations-Verarbeitungsaufträgen, bzw. von Initialschaltkennzeichen, zunächst eine relativ hohe Anzahl von diesen angenommen werden würde, also zunächst noch keine Abweisungen stattfinden würden, und zwar so lange, bis schließlich von der Meßeinrichtung B her die durch die Belastbarkeitsmessung gesteuerte Regelung des Vergleichswertes diesen so weit wieder herab gesetzt haben würde, daß anhand von entsprechend wieder niedriger werdenden Vergleichswerten der Abweisungsprozentsatz wieder definitive Werte annimmt, also von dem Wert Null aus ansteigt. Dies aber würde zu einer vorübergehenden Überbelastung des Zentralsteuerwerkes führen. Um diesen Effekt zu vermeiden, ist in der angedeuteten Weise vorgesehen, daß ein bei Absinken des Abweisungsprozentsatzes auf den Wert Null gegebener Vergleichswert im Speicher S des Zählers W in seinen Zusatzspeicher s übertragen wird, damit er zu einem späteren Zeitpunkt, und zwar nach Beendigung einer Lastregulierphase und einer Phase des Ruhens der Abweisungsvorgänge und nach einer erneuten Initialisierung der Abweisungsvorgänge aus dem Zusatzspeicher s in den Speicher S wieder zurückübertragen wird.

Nach einer Deaktivierung der Vergleichswert-Regelung arbeitet der Zähler W mit einem Initialisierungs-Vergleichswert, der höher ist als der gespeicherte Vergleichswert im Speicher S. Dies ist der bereits weiter oben erwähnte "besondere" Schwellenwert. Eine erneute Initialisierung der Vergleichswert-Regelung und der Bildung von Abweisungsprozentsatz-Daten kann durch zweierlei Ursachen herbeigeführt werden. Erreicht der Belegungsratenzähler W, der die Initialschaltkennzeichen zählt, erneut einen wieder höheren Wert, und zwar einen Zählwert, der gleich oder höher ist als der Schwellenwert, so wird erneut die Auswertung des von der Meßeinrichtung B gelieferten Bestimmungsergebnisses gestartet. Dies geschieht auch, wenn der Füllungsgrad des sowohl Initialaufträge als auch Nachfolgeaufträge speichernden FiFo-Speichers einen bestimmten Grenzwert erreicht oder überschreitet. Der Zeitraum zwischen Initialisierung und Deaktivierung stellt eine Lastregulierphase dar; in ihr befindet sich die aktuelle Informationsverarbeitungs-Arbeitsbelastung in einem den Vollast- und Überlastbereich umfassenden Lastregulierbereich.

Es ist also vorgesehen, daß der im Speicher S gespeicherte Initialisierungswert so hoch festgelegt ist, daß die Initialisierung nur stattfindet, wenn bei einer nur kurzzeitigen Überlast diese die Belastbarkeit ganz wesentlich übersteigt. In diesem Fall erfolgt die Initialisierung sehr kurzfristig. Übersteigt die erneut eintretende Überlast die Belastbarkeitsgrenze dagegen nur wenig, so dauert es länger, bis die Initialisierung einsetzt. Hierfür ist ein in der Meßeinrichtung F des FiFo-Speichers FiFo gespeicherter Grenzwert vorgesehen. Wenn bei relativ geringer aber länger andauernder Überlast sich dieser Speicher stetig füllt, erfolgt die Initialisierung dadurch, daß der Füllungsgrad dieses Speichers den Grenzwert erreicht oder überschreitet. Die Verzugszeit ist hierbei näherungsweise umgekehrt proportional dem Ausmaß der Überlastung und größer als die Reaktionszeit des Zählers W auf plötzlich eintretende starke Überlast. Der im Speicher S gespeicherte Initialisierungswert und der in der Meßeinrichtung F des FiFo-Speichers gespeicherte Grenzwert ergänzen also einander in ihrer Wirkung, und zwar in der Weise, daß der im Speicher S gespeicherte Initialisierungswert für ein möglichst rasches Erkennen von hoher Überlastung und der in der Meßeinrichtung F gespeicherte Grenzwert für ein sicheres Erkennen auch von geringer Überlastung Sorge trägt. Die Belastung des zentralen Steuerwerks wird außer durch die Zuführung von Informationsverarbeitungsaufträgen von den dezentralen Schaltwerken GP1 - GPn her (externes Überangebot) auch durch interne Abläufe verursacht, zum Beispiel Schaltungsabläufe für Zwecke der Prüftechnik und/oder der Sicherungstechnik (internes Überangebot).

Sowohl der Initialisierungswert als auch der Grenzwert dienen in der angegebenen Weise also in Phasen des Ruhens der Abweisungsvorgänge dazu, ein Ansteigen der Belastung des zentralen Schaltwerks richtig zu erkennen, wobei die Höhe eines Belastungssprunges (erkennbar mittels Initialisierungswert) und/oder eine länger andauernde relativ geringe Überlastung (erkennbar mittels des obengenannten Grenzwertes) maßgebend sein kann. Beide Werte sind in der angegebenen Weise im Speicher S des Belegungsratenzählers W bzw. in der Meßeinrichtung F des FiFo-Speichers gespeichert. Erfindungsgemäß ist vorgesehen, daß der im Speicher S gespeicherte Wert, also der für die Initialisierung der Übertragung der Abweisdaten maßgebende Schwellenwert sowie das bei aktiver Überlast zum Vergleich dienende Regelnormal mittels jeweils in einem Zeitraum zwischen Absinken der Abweisrate auf den Wert Null und erneuter Überschreitung dieses Schwellenwertes, also in Phasen des Ruhens der Abweisvorgänge, gewonnener Belastbarkeits-Meßergebnisse laufend justiert werden.

Diese Belastbarkeits-Messungen werden in den Phasen des Ruhens der Abweisungsvorgänge ebenfalls mit Hilfe der Meßeinrichtung B sowie mit Hilfe des Belegungsratenzählers W durchgeführt. Für diese zeitlich also außerhalb der Lastregulierphasen stattfindenden Belastbarkeits-Messungen sind Meßzeitintervalle festgelegt, die zum Ausgleich von kurzzeitigen diesbezüglichen Schwankungen ausreichend groß bemessen sind, um den verbleibenden Meßfehler genügend klein zu halten. Innerhalb eines jeden Meßzeitintervalls wird nun die Anzahl von pro Meßzeitintervall eingetroffenen Informationsverarbeitungsaufträgen, insbesondere nur der Initialschaltkennzeichen, ermittelt. Ferner wird pro Meßzeitintervall mit Hilfe der Meßeinrichtung B die durch Informationsverarbeitungsaufträge verursachte derzeitige Belastung des zentralen Schaltwerkes in der bereits beschriebenen Weise gemessen. Dabei wird das Verhältnis einer in diesem Meßzeitintervall maximal zulässigen Verkehrsbelastung zu der in diesem Meßzeitintervall aus den eintreffenden Informationsverarbeitungsaufträgen resultierenden tatsächlichen Verkehrsbelastung gebildet. Mittels dieses durch die Meßeinrichtung B für jedes Meßzeitintervall gebildeten Verhältniswertes wird dann die ermittelte Anzahl von pro Meßzeitintervall eingetroffenen Informationsverarbeitungsaufträgen, insbesondere nur der Initialschaltkennzeichen, nach Maßgabe dieses Verhältnisses erhöht und zur laufenden Justierung des Schwellenwertes und des Regelnormals im Speicher S des Belegungsratenzählers verwendet. Außerdem kann vorgesehen werden, den Anfangswert für das Regelnormal zum Beispiel um 10 oder 20 % zu erhöhen, wodurch eine Abweisung dementsprechend erst später erfolgt.

Die Beschreibung wendet sich nun wieder der Darstellung der Vorgänge innerhalb der Lastregulierphasen zu. In einer solchen liefert die Meßeinrichtung B also ein die Belastbarkeit des zentralen Steuerwerkes betreffendes Bestimmungsergebnis, das die aus den weiter oben erläuterten Gründen stets etwas schwankende Belastbarkeit erfaßt und deren Werte über Zeiträume integriert, die jeweils ebenfalls groß genug sind, um dieses Bestimmungsergebnis mit ausreichender Ergebnisgenauigkeit zu gewährleisten. Dieses Bestimmungsergebnis findet in dem im Speicher B1 stets neu gespeicherten Belastbarkeitsmeßwert Ausdruck, ferner in den zum Belegungsratenzähler W hin übertragenen Steigerungs- und Minderungssignalen und in dem dadurch im Belegungsratenzähler W laufend regulierten Vergleichswert.

Wie weiterhin ausgeführt wurde, wird am Ende einer Lastregulierphase, also wenn die vom Belegungsratenzähler W periodisch gewonnenen Zählergebnisse laufend, d.h. von Zählergebnis zu Zählergebnis, kleiner werden, ein dabei im Moment des Erreichens oder Unterschreitens des derzeit im Speicher S gespeicherten Vergleichswertes vorhandener Wert, der also zugleich dem Vergleichswert und dem neuesten Zählwert entspricht, bei Beginn einer Mindest-Karenzzeit im Zusatzspeicher s gespeichert und bei Ablauf derselben aus diesem in den Speicher S übertragen. Dieser Wert bleibt nach Beendigung einer Lastregulierphase bis zum Beginn der durch eine Initialisierung eingeleiteten nächsten Lastregulierphase im Speicher s des Belegungsratenzählers W gespeichert. Dieser Wert dient als Ausgangswert für die Ermittlung der Startschwelle und des Regelnormals, bis nach Ende des ersten Meßzeitraumes ein neuerer Ausgangswert vorliegt und durch diesen der im Speicher S abgelegte Wert überschrieben wird. Durch die laufende Justierung der obengenannten Schwellenwerte bei nicht aktiver Überlastabwehr ist auch eine deutliche Verkürzung der Mindest-Karenzzeit zulässig, wodurch ein quasi berechtigtes längeres Aufrechterhalten des Überlastabwehrzustandes wesentlich verkürzt wird.

**Patentansprüche**

1.  Verfahren zur Belastungsregelung für Fernmeldevermittlungsanlagen, insbesondere Fernsprechvermittlungsanlagen, mit wenigstens einem Informationen verarbeitenden Schaltwerk (ZW), das sowohl Reihen von vermittlungstechnischen Informations-Verarbeitungsaufträgen für gewählte individuelle Verbindungen, als auch betriebstechnische Daten-Verarbeitungsaufträge für Funktionsprüfvorgänge und/oder für einen dem Aufbau einer Vermittlungsanlage entsprechenden, dem Vermittlungsbetrieb dienenden und hierfür zu speichernden Datenbestand erhält und zu verarbeiten hat, und mit einer der Messung der Verarbeitungsbelastbarkeit des Schaltwerkes (ZW) dienenden Meßeinrichtung (B), die mittels eines Soll-Ist-Vergleiches bezüglich einer pro Meßperiode jeweils sich ergebenden Summe der Ist-Belegt-Zeiten des Schaltwerkes (ZW) einerseits und einer aus der Länge der Meßperiode und einem festgelegten Schaltwerks-Soll-Verkehrswert resultierenden Soll-Belegungs-Gesamtdauer andererseits zur Regelung eines Belastbarkeitswerts vorgesehen ist, der die momentane Belastbarkeit des Schaltwerkes (ZW) hinsichtlich der Anzahl von pro Meßperiode vom Schaltwerk (ZW) zu verarbeitenden Informationen angibt und von einem Zähler (W) aufgenommen wird, der einerseits den Zustrom dieser zu verarbeitenden Informationen zum Schaltwerk (ZW) durch Zählung derselben mittels Vorwärtsschaltung erfaßt und andererseits zur Bewertung dieses Zustromes entweder kontinuierlich in Einzelschritten mit einem durch den Belastbarkeitswert bestimmten Takt wieder rückwärts geschaltet oder in durch den Belastbarkeitswert bestimmten Zeitabständen jeweils auf null zurückgestellt wird, und dessen maximal erreichter Zählerstand ein Bewertungsergebnis für diesen Zustrom ist, welches bei Erreichen oder bei Überschreiten eines durch den momentanen Belastbarkeitswert vorgegebenen Schwellwertes Abweiseinrichtungen veranlaßt, einen Teil der zur Verarbeitung anstehenden Informationen abzuweisen, **dadurch gekennzeichnet,** daß die Informations-Verarbeitungsaufträge gegenüber den Daten-Verarbeitungsaufträgen von dem Schaltwerk (ZW) mit einem Vorrang aufgenommen werden, gemäß dem Daten-Verarbeitungsaufträge nur aufgenommen werden, wenn weniger als eine maximale Anzahl von Informations-Verarbeitungsaufträgen für dasselbe vorliegen,

- daß für eine jeweilige Meßperiode zunächst ein Soll-Ist-Vergleich erfolgt, dem die aus der Gesamtheit der Verarbeitungsaufträge resultierende Summe der Ist-Belegt-Zeiten und der der Gesamtheit der Verarbeitungsaufträge entsprechende Schaltwerks-Soll-Verkehrswertzugrundegelegt sind,
  - - daß in Fällen, in denen diese Summe kleiner als die resultierende Soll-Belegungs-Gesamtdauer ist, der Belastbarkeitswert erhöht wird,
  - - daß in Fällen, in denen diese Summe größer als die resultierende Soll-Belegungs-Gesamtdauer ist, dann ein modifizierter Soll-Ist-Vergleich durchgeführt wird, dem die nur aus den Informations-Verarbeitungsaufträgen resultierende Summe der Ist-Belegt-Zeiten und der nur den Informations-Verarbeitungsaufträgen entsprechende Schaltwerks-Soll-Verkehrswert zugrundegelegt sind, daß die Regelung des Belastbarkeitswertes nach diesem modifizierten Soll-Ist-Vergleich in der Weise erfolgt,
  - -- daß dann, wenn die für den modifizierten Soll-Ist-Vergleich relevante Summe kleiner - höher - als die für den Soll-Ist-Vergleich relevante resultierende Soll-Belegungs-Gesamtdauer ist, der Belastbarkeitswert erhöht - erniedrigt - wird, wodurch mittels der Abweiseinrichtungen eine Erhöhung - Verringerung - der Anzahl von pro Meßperiode vom Schaltwerk (ZW) zu verarbeitenden Informations-Verarbeitungsaufträgen bewirkt wird.

2. Verfahren nach Anspruch 1,
   **dadurch gekennzeichnet,**
   daß nach Maßgabe des Schwellenwertes ein bei der erneuten Überschreitung des Schwellenwertes geltendes Regelnormal justiert wird, das der Bildung der Abweisdaten zugrunde liegt.

## Claims

1. Method for traffic load control for telecommunication exchanges, in particular telephone exchanges, equipped with at least one information-processing control processor (ZW), which receives and has to process both series of information-processing switching jobs for individual connections dialled and operational data processing jobs for function-checking processes and/or for a data set corresponding to the configuration of an exchange, used for switching operation and to be stored for this purpose, and comprising a measuring device (B) used for measuring the processing load-carrying capability of the control processor (ZW), which is provided for controlling a load-carrying capability value by means of a nominal/actual comparison with respect to a sum, in each case obtained per measuring period, of the actual occupied times of the control processor (ZW) on the one hand, and a nominal total occupancy period resulting from the length of the measuring period and a fixed nominal control processor traffic load, which specifies the instantaneous load-carrying capability of the control processor (ZW) with respect to the number of information items to be processed by the control processor (ZW) per measuring period and is accepted by a counter (W) which, on the one hand, detects the inflow to the control processor (ZW) of these information items to be processed by counting them by means of incrementing and, on the other hand, is decremented again either continuously in single steps by means of a clock pulse determined by the load-carrying capability value for evaluating this inflow, or is in each case reset to zero at time intervals determined by the load-carrying capability value, and the maximum count reached is an evaluation result for this inflow, which, when it reaches or exceeds a threshold predetermined by the instantaneous load-carrying capability value causes the rejection devices to reject a part of the information items present for processing, characterised in that, compared with the data processing jobs, the information processing jobs are accepted by the control processor (ZW) with a priority according to which data processing jobs are only accepted if fewer than a maximum number of information processing jobs are available for it,

- in that, for a respective measuring period, first a nominal/actual comparison is made which has as a basis the sum of the actual occupied times resulting from the totality of processing jobs and the nominal control processor traffic load corresponding to the totality of processing jobs,
- - that in cases in which this sum is smaller than the resultant nominal total occupancy period, the load-carrying capability value is increased,
- - that in cases, in which this sum is greater than the resultant nominal total occupancy period, a modified nominal/actual comparison is carried out which has as a basis the sum of the actual occupied times resulting only from the information processing jobs and the nominal control processor traffic load corresponding only to the information processing jobs, that the control of the load-carrying capability value is effected in accordance with this modified nominal/actual comparison in such a manner
- -- that, when the sum relevant to the modified nominal/actual comparison is lower - higher - than the resultant nominal total occupancy period relevant to the nominal/actual comparison, the load-carrying capability value is increased - decreased, as a result of which an increase - decrease - in the number of information processing jobs to be processed by the control processor (ZW) per measuring period is effected by means of the rejection devices.

2. Method according to Claim 1, characterised in that a control normal, which applies with the renewed exceeding of the threshold value and which forms the basis for the forming of the rejection data, is adjusted as determined by the threshold value.

## Revendications

1. Procédé pour régler la charge pour des installations de commutation de télécommunications, notamment des installations de commutation téléphonique, comportant au moins une unité de commutation (ZW), qui traite les informations et reçoit et doit traiter aussi bien des séries d'ordres techniques de commutation pour le traitement d'informations pour des liaisons individuelles sélectionnées, que pour des ordres de traitement de données de la technique de service pour des opérations de contrôle de fonctionnement et/ou pour un ensemble de données qui correspond à la structure d'une installation de commutation, sert pour l'opération de commutation et doit être mémorisé à cet effet, et un dispositif de mesure (B), qui est utilisé pour la mesure de la capacité de charge de traitement de l'unité de commutation (ZW) et qui, grâce à une comparaison valeur de consigne-valeur réelle concernant une somme, que l'on obtient respectivement pour chaque période de mesure, des temps réels d'occupation de l'unité de commutation (ZW) d'une part et d'une durée totale d'occupation de consigne, qui résulte de la durée de la période de mesure et d'une valeur de trafic de consigne fixée de l'unité de commutation, d'autre part, est prévu pour la régulation d'une valeur de la capacité de charge, qui indique la capacité de charge instantanée de l'unité de commutation (ZW) en rapport avec le nombre d'informations devant être traité pour chaque période de mesure par l'unité de commutation (ZW), et est reçu par un compteur (W), qui d'une part détecte le flux de ces informations devant être traitées, qui arrivent à l'unité de commutation (SW), pour le comptage de ces informations au moyen d'un circuit de comptage progressif, et d'autre part soit réalise continûment à nouveau un comptage régressif selon des pas individuels, avec une cadence déterminée par la valeur de la capacité de charge, pour l'évaluation de ce flux d'arrivée, soit est ramené respectivement à zéro à des intervalles de temps déterminés par la valeur de la capacité de charge, et dont l'état de comptage maximum est un résultat d'évaluation de ce flux d'arrivée, qui, lorsqu'il atteint ou dépasse une valeur de consigne prédéterminée par la valeur instantanée de la capacité de charge, déclenche des dispositifs de rejet pour rejeter une partie des informations qui arrivent pour être traitées,
caractérisé par le fait
que les ordres de traitement d'informations sont reçus, par rapport aux ordres de traitement de données, par l'unité de commutation (ZW), avec une priorité avec laquelle des ordres de traitement de données sont reçus uniquement lorsqu'un nombre inférieur et un nombre maximum d'ordres de traitement d'informations sont présents pour cette même unité,

- que pour une période respective de mesure est tout d'abord exécutée une comparaison valeur de consigne-valeur réelle, qui est basée sur la somme, qui résulte de la totalité des ordres de traitement, des temps réels d'occupation et la valeur de trafic de consigne de l'unité de commutation, qui correspond à la totalité des ordres de traitement,
    - - que dans le cas où cette somme est inférieure à la durée totale d'occupation de consigne résultante, la valeur de la capacité de charge est accrue,
    - - que dans le cas où cette somme est supérieure à la durée totale d'occupation de consigne résultante, est alors exécutée une comparaison valeur de consigne-valeur réelle, modifiée, qui est basée sur la somme, qui résulte des ordres de traitement d'informations, des temps réels d'occupation et de la valeur du trafic de consigne de l'unité de commutation, qui correspond uniquement aux ordres de traitement d'informations, et que la régulation de la valeur de la capacité de charge s'effectue en fonction de cette comparaison valeur de consigne-valeur réelle, modifiée, de telle sorte
        - -- que, lorsque la somme importante pour la comparaison valeur de consigne-valeur réelle, modifiée, est inférieure-supérieure à la durée totale d'occupation de consigne résultante, qui est importante pour la valeur de consigne-valeur réelle, la valeur de la capacité de charge est accrue - réduite -, ce qui provoque, par l'intermédiaire des dispositifs de rejet, un accroissement - une réduction - du nombre d'ordres de traitement d'informations devant être traitées par l'unité de commutation (ZW) pendant chaque période de mesure.

2. Procédé suivant la revendication 1, caractérisé par le fait qu'en fonction de la valeur de seuil, on ajuste une valeur normale de réglage, qui est valable dans le cas d'un nouveau dépassement de la valeur de seuil et sur laquelle est basée l'information déterminée de rejet.

EP 0 265 817 B1